# EUROPÄISCHE PATENTANMELDUNG

(11) **EP 2 336 246 A1**
(43) Veröffentlichungstag der Anmeldung: **22.06.2011**
(21) Anmeldenummer: 09015398.2
(22) Anmeldetag: 12.12.2009
(51) Int. Cl.: C08L 69/00

(54) **Copolycarbonat-Zusammensetzungen mit verbesserten thermischen Eigenschaften auf Basis von Blends**

(71) Anmelder: Bayer MaterialScience AG, 51368 Leverkusen (DE)
(72) Erfinder: Heuer, Helmut-Werner, 47829 Krefeld (DE); Wehrmann, Rolf, 47800 Krefeld (DE)

(57) **Zusammenfassung**

Die Erfindung betrifft Zusammensetzungen enthaltend wenigstens ein Copolycarbonat enthaltend einen oder mehrere Bisphenol Bausteine sowie ein oder mehrere weitere spezielle (Co)polycarbonate wie auch Zusammensetzungen, die optional Zusatzstoffe enthalten, deren Verwendung zur Herstellung von Formteilen und daraus erhältliche Formteile.

## Beschreibung

Die Erfindung betrifft Zusammensetzungen enthaltend wenigstens ein Copolycarbonat enthaltend einen oder mehrere Bisphenol-Bausteine sowie ein oder mehrere weitere spezielle (Co)polycarbonate wie auch Zusammensetzungen, die optional Zusatzstoffe enthalten, deren Verwendung zur Herstellung von Formteilen und daraus erhältliche Formteile.

Copolycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere thermische und mechanische Eigenschaften gefordert sind, beispielsweise Föhne, Anwendungen im Automobilbereich, Kunststoffabdeckungen, Streuscheiben oder Lichtleitelemente sowie Lampenabdeckungen oder Lampeneinfassungen (bezels). Diese Copolycarbonate können als Blendpartner für weitere thermoplastische Kunststoffe verwendet werden.

Bei diesen Zusammensetzungen werden praktisch immer die guten thermischen und mechanischen Eigenschaften wie Vicat-Temperatur (Wärmeformbeständigkeit) und Glastemperatur zwingend benötigt. Um die erhöhte Wärmeformbeständigkeit zu erzielen, muss man auf spezielle Bisphenole, die aufwendig zu synthetisieren und damit auch teuer sind, zurückgreifen.

DE 102004020673 beschreibt Copolycarbonate mit verbesserter Fließfähigkeit basierend auf Bisphenolen mit einer Ether- bzw. Thioetherverknüpfung.

DE 3918406 offenbart Blends für optische Datenspeicher auf Basis eines speziellen Polycarbonates mit Elastomeren oder anderen Thermoplasten sowie deren Verwendung bei optischen Anwendungen, speziell optischen Datenspeichern wie Compact Disks.

DE 102008023800 beschreibt die Verwendung von Alkylphenolen als Kettenabbrecher zur Verringerung der Uneinheitlichkeit U = (Mw/Mn)-1 bei der Herstellung von Copolycarbonaten in einem Kontiprozess.

Bei nach dem Stand der Technik bekannten Methoden wird die Wärmeformbeständigkeit durch das Einfügen eines speziellen Bausteins auf Basis von 1,1-Bis-(4-hydroxyphenyl)-3,3,5-trimethylcyclohexan (Bisphenol TMC) in das Polycarbonatgerüst erzielt. Dieses sogenannte Hoch-Tg-Polycarbonat ist kostspielig und beeinflusst erheblich den wirtschaftlichen Faktor.

Im Stand der Technik findet der Fachmann allerdings keinen Hinweis darauf, wie er bei einer vorgegebenen / definierten Wärmeformbeständigkeit die Menge an kostspieligem Hoch-Tg-Polycarbonat in PC Blends, die in einem Compoundierschritt hergestellt werden, reduzieren kann. Insbesondere gibt es keinen Hinweis bezüglich des Einflusses der Blendkomponente, speziell des Einflusses des Kettenabbrechers in mindestens einem oder zwei Blendpartnern auf die Wärmeformbeständigkeit der Gesamtmischung.

Es bestand daher die Aufgabe, Zusammensetzungen enthaltend aromatische Polycarbonate zu finden, die bei gleich bleibender Wärmeformbeständigkeit einen geringeren Anteil an Hoch-Tg-Polycarbonat aufweisen.

Überraschenderweise wurde gefunden, dass Zusammensetzungen aus speziellen (Hoch-Tg) Copolycarbonaten (Komponente A) mit einem (Co)polycarbonat (Komponente B) immer dann weniger speziellen (Hoch-Tg) Copolycarbonatanteil benötigen, um gleich hohe Wärmeformbeständigkeiten zu erzielen, wenn speziell substituierte Kettenabbrecher entweder in Komponente A oder Komponente B oder in beiden Komponenten enthalten sind. Ein synergistischer Effekt entsteht bei der Verwendung dieser besonderen (Co)Polycarbonate, die mit speziell substituierten Kettenabbrechern hergestellt wurden.

Dies gilt überraschenderweise für Mischungen in einem sehr großen Viskositäts- und Vicat-Bereich.

Die beschriebenen neuen Eigenschaftskombinationen stellen ein wichtiges Kriterium für die mechanische und thermische Performance des spritzgegossenen bzw. extrudierten Bauteils dar. Aus den erfindungsgemäßen Copolycarbonat-Zusammensetzungen hergestellte Spritzgussteile oder Extrudate weisen signifikant verbesserte thermische Eigenschaften (Vicat-Temperatur) auf.

Unter Polycarbonatzusammensetzungen (oder Blends) im Sinne dieser Anmeldung versteht man Mischungen aus zwei oder mehreren Polycarbonaten, die gegebenenfalls mit Zusatzstoffen (Komponente C) versehen sein können.

Gegenstand der vorliegenden Erfindung sind daher Copolycarbonat-Zusammensetzungen enthaltend als Komponente
A) 5 bis 90 Gew.-Teile, bevorzugt 10 bis 80 Gew.-Teile (bezogen auf die Summe der Gewichtsteile der Komponenten A+B) eines Copolycarbonats enthaltend eine oder mehrere Monomereinheiten abgeleitet von Verbindungen des Diphenolbausteins der Formel (1) 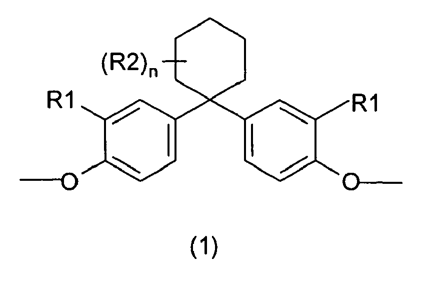 in der
   R1 für Wasserstoff oder C₁-C₄-Alkyl, bevorzugt Wasserstoff,
   R2 für C₁-C₄-Alkyl, bevorzugt Methyl,
   n für 0, 1, 2 oder 3, bevorzugt 3 stehen,
   als Komponente
B) 95 bis 10 Gew.-Teile, bevorzugt 90 bis 20 Gew.-Teile (bezogen auf die Summe der Gewichtsteile der Komponenten A+B) eines (Co)polycarbonats enthaltend eine oder mehrere Monomereinheiten von Verbindungen der allgemeinen Formel (2): 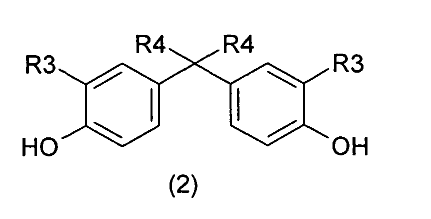 in denen R3 für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht
   und
   in denen R4 für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,
   wobei wenigstens eine der Komponenten A oder B wenigstens zum Teil als Endgruppe eine Struktureinheit der Formel (3) enthält 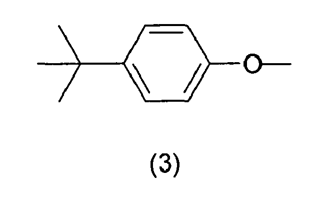
C) gegebenenfalls 0 bis 5 Gew.-Teile, bevorzugt 0 bis 2 Gew.-Teile, besonders bevorzugt 0 bis 1 Gew.-Teile (jeweils bezogen auf die Summe der Gewichtsteile der Komponenten A+B) Zusatzstoffe.

### Komponente A

Die Monomereinheit führt man über ein oder mehrere entsprechenden Diphenole der allgemeinen Formel (1) ein: 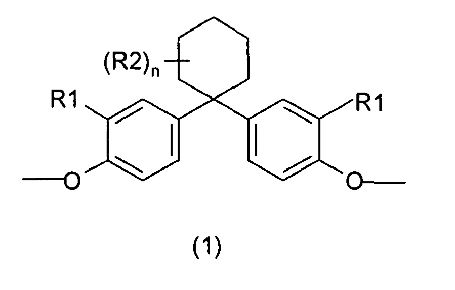 in der
R1 für Wasserstoff oder C₁-C₄-Alkyl, bevorzugt Wasserstoff,
R2 für C₁-C₄-Alkyl, bevorzugt Methyl,
n für 0, 1, 2 oder 3, bevorzugt 3 stehen.

Die erfindungsgemäß einzusetzenden Diphenole der Formeln (1a) 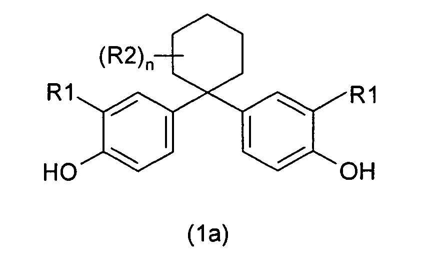 wobei R1, R2 und n die oben genannte Bedeutung haben
und ihr Einsatz in Homopolycarbonaten sind in der Literatur teilweise bekannt (DE 3918406).

Besonders bevorzugt ist 1,1-Bis-(4-hydroxyphenyl)-3,3,5-trimethylcyclohexan (Bisphenol TMC) mit der Formel (1b):

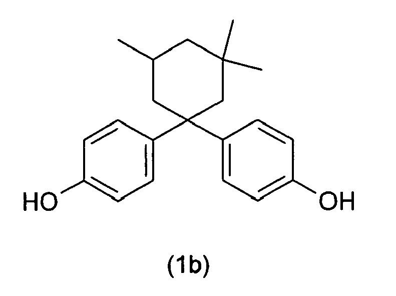

Neben einem oder mehreren Diphenolen der Formeln (1), können als weitere Monomereinheit ein oder mehrere Diphenole ausgewählt aus der Gruppe der Verbindungen der Formel (4) enthalten sein: 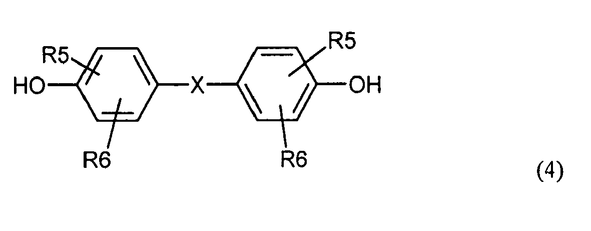 in der
R5 und R6 unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
X für eine Einfachbindung, -SO₂- -CO-, -O-, -S-, C₁-C₆-Alkylen, C₂-C₅-Alkyliden oder C₅-C₆-Cycloalkyliden, welches mit C₁-C₆-Alkyl, vorzugsweise Methyl oder Ethyl substituiert sein kann, ferner für C₆-C₁₂-Arylen, welches gegebenenfalls mit weiteren Heteroatome enthaltenden aromatischen Ringen kondensiert sein kann, steht.

Bevorzugt steht X für eine Einfachbindung, C₁-C₅-Alkylen, C₂-C₅-Alkyliden, C₅-C₆-Cycloalkyliden, -O-, -SO-, -CO-, -S-, -SO₂- oder ein für einen Rest der Formel 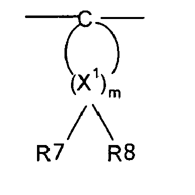 wobei
R7 und R8 für jedes X¹ individuell wählbar, unabhängig voneinander Wasserstoff oder C₁-c₆-Alkyl, vorzugsweise Wasserstoff, Methyl oder Ethyl bedeuten und
X¹ Kohlenstoff und
m eine ganze Zahl von 4 bis 7, bevorzugt 4 oder 5 bedeuten, mit der Maßgabe, dass an mindestens einem Atom X¹, R7 und R8 gleichzeitig Alkyl sind.

Beispielhaft werden für die Diphenole der Formel (4), die neben den erfindungsgemäßen Diphenolen der Formel (1) eingesetzt werden können, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen und auch α,ω- Bis-(hydroxyphenyl)-pholysiloxane genannt.

Bevorzugte Diphenole der Formel (4) sind beispielsweise 4,4`-Dihydroxybiphenyl (DOD), 4,4'-Dihydroxybiphenylether (DOD-Ether), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind Verbindungen der allgemeinen Formel (4a), 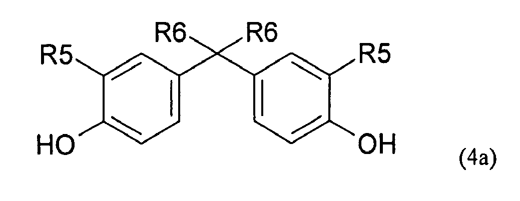 in denen R5 für H, lineare oder verzweigte C₁-C₁₀-Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in denen R6 für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (4b) ganz besonders bevorzugt.

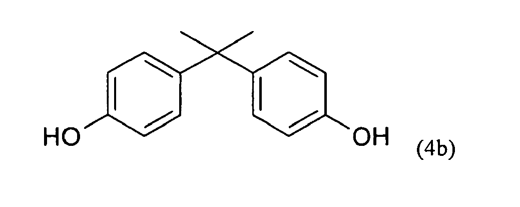

Die Diphenole der allgemeinen Formeln (4) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Anteil der Diphenole der Formel (1) im Copolycarbonat beträgt 0,1 - 88 mol-%, bevorzugt 1 - 86 mol-%, besonders bevorzugt 5 - 84 mol-% und ganz besonders bevorzugt 10 - 82 mol-% (bezogen auf die Summe der Mole eingesetzter Diphenole).

In einer bevorzugten Ausführungsform enthält die Polycarbonatzusammensetzung 5 bis 90 Gew.-Teile, bevorzugt 10 bis 80 Gew.-Teile, besonders bevorzugt 51 bis 80 Gew.-Teile (bezogen auf die Summe der Gewichtsteile der Komponenten A+B) an Komponente A.

Die bevorzugten Diphenolateinheiten der Copolycarbonate gemäß Komponente A leiten sich von Monomeren mit den allgemeinen Strukturen der oben beschriebenen Formeln (1) und (4) ab.

Die Copolycarbonatkomponente der Polycarbonatzusammensetzungen kann als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

### Komponente B

Komponente B der Polycarbonatzusammensetzungen leitet sich von einer oder mehrerer Diphenoleinheiten der Formel (2) ab: 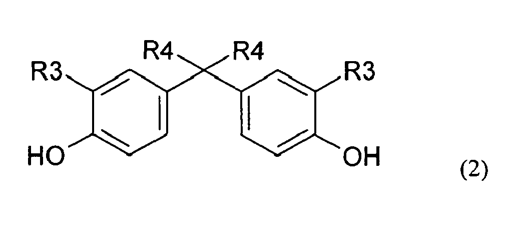 in denen R3 für H, lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für H oder C₁-Alkyl (Methyl) steht und
in denen R4 für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (4b) ganz besonders bevorzugt.

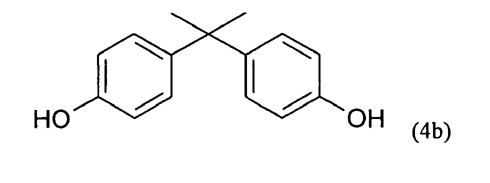

Neben einem oder mehreren Diphenolen der Formeln (2), können als weitere Monomereinheit ein oder mehrere Diphenole ausgewählt aus der Gruppe der Verbindungen der Formel (4) enthalten sein, wie sie bereits für Komponente A beschrieben sind.

In einer bevorzugten Ausführungsform enthält die Polycarbonatzusammensetzung 95 bis 10 Gew.-Teile, bevorzugt 90 bis 20 Gew.-Teile, besonders bevorzugt 80 bis 49 Gew.-Teile (bezogen auf die Summe der Gewichtsteile der Komponenten A+B) an Komponente B.

Die erfindungsgemäßen Polycarbonatzusammensetzungen weisen bei speziellen Verhältnissen der Komponenten A und B eine geringere Schmelzviskosität und damit ein verbessertes Verarbeitungsverhalten im Spritzguss der so erhaltenen Copolycarbonat-Zusammensetzungen auf.

Dies gilt für Zusammensetzungen, in denen die Komponente B in einer Konzentration von größer oder gleich 50 Gew.% vorliegt und einen Alkylgruppen-haltigen Kettenabbrecher in Komponente B enthält.

Die Polycarbonate bzw. Copolycarbonate gemäß Komponenten A und/oder B können auch verzweigt sein. Hierzu werden bestimmte geringe Mengen, vorzugsweise Mengen zwischen 0,05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyt)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α, α'α"-Tris-(4-hydroxyphenyl)-1,3,5-triisopropy)-benzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan (THPE) und Bis-(3-methyl-4-hydroxyphenyl)-2-oxo-2,3-dihydroindol als sogenannte Verzweiger, eingesetzt. Bevorzugt werden Isatinbiskresol sowie 1,1,1-Tri-(4-hydroxyphenyl)-ethan (THPE) und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt meist zu rheologischen Eigenschaften der erhaltenen Polycarbonate, die sich in einer Strukturviskosität im Vergleich zu linearen Typen äußert.

Zur Gewinnung hochmolekularer Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Die Menge an einzusetzendem Kettenabrecher beträgt 0,5 Mol% bis 10 Mol-%, bevorzugt 1 Mol-% bis 8 Mol-%, besonders bevorzugt 2 Mol-% bis 6 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.%-ig).

Die Polycarbonate gemäß Komponente A und B der vorliegenden Erfindung können durch das Phasengrenzflächenverfahren erzeugt sein. Dabei werden die Diphenole der Formeln (1) und (2), und evtl. Verzweiger in wässriger alkalischer Lösung gelöst und mit einer gegebenenfalls in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht. Die Reaktionsführung kann auch mehrstufig erfolgen.

Solche Verfahren zur Herstellung von Polycarbonat sind als Zweiphasengrenzflächenverfahren grundsätzlich z.B. aus H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 bekannt und die grundlegenden Bedingungen daher dem Fachmann geläufig.

Die Konzentration der Diphenole in der wässrigen alkalischen Lösung beträgt dabei 2 bis 25 Gew.-%, bevorzugt 2 bis 20 Gew. % besonders bevorzugt 2 bis 18 Gew. % und ganz besonders bevorzugt 3 bis 15 Gew. %. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5, bevorzugt 20:80 bis 80:20, besonders bevorzugt 30:70 bis 70:30 und ganz besonders bevorzugt 40:60 bis 60:40. Das Molverhältnis Diphenol zu Phosgen ist kleiner als 1:10, bevorzugt kleiner als 1:6, besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew.-%, bevorzugt 2 bis 20 Gew. %, besonders bevorzugt 2 bis 18 Gew. % und ganz besonders bevorzugt 3 bis 15 Gew. %.

Die Konzentration der Aminverbindung beträgt bezogen auf die eingesetzte Diphenolmenge 0,1 bis 10 mol %, bevorzugt 0,2 bis 8 mol %, besonders bevorzugt 0,3 bis 6 mol %, und ganz besonders bevorzugt 0,4 bis 5 mol %.

Unter Diphenolen sind Diphenolmischungen, ausgewählt aus den oben genannten Verbindungen, mit Anteilen der oben genannten Verzweiger, zu verstehen. Bei der Carbonatquelle handelt es sich um Phosgen, Diphosgen oder Triphosgen, bevorzugt um Phosgen. Für den Fall, dass Phosgen eingesetzt wird, kann ggf. auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)-pyridin. Besonders geeignet sind Triethylamin, Tripropylamin, Triisopropylamin, Tributylamin, Triisobutylamin, N-Methylpiperidin, N-Ethylpiperidin, und N-Propylpiperidin.

Als organisches Lösemittel kommen halogenierte Kohlenwasserstoffe wie Methylenchlorid, Chlorbenzol, Dichlorbenzol, Trichlorbenzol oder Gemische davon oder aromatische Kohlenwasserstoffe, wie z.B. Toluol oder Xylole, in Frage. Die Reaktionstemperatur kann -5 °C bis 100 °C, bevorzugt 0 °C bis 80 °C, besonders bevorzugt 10 °C bis 70 °C und ganz besonders bevorzugt 10 °C bis 60 °C betragen.

Möglich ist auch die Herstellung der Polycarbonate gemäß Komponenten A und/oder B nach dem Schmelzumesterungsverfahren, bei dem die Diphenole mit Diarylcarbonaten, meist Diphenylcarbonat, in Anwesenheit von Katalysatoren, wie Alkalisalzen, Ammonium- oder Phosphoniumverbindungen, in der Schmelze umgesetzt werden.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formeln (5) und (6) 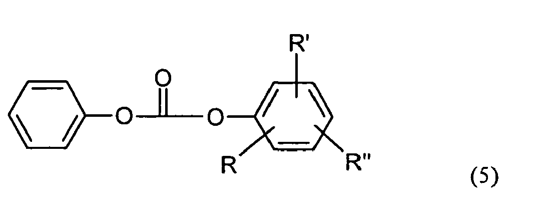 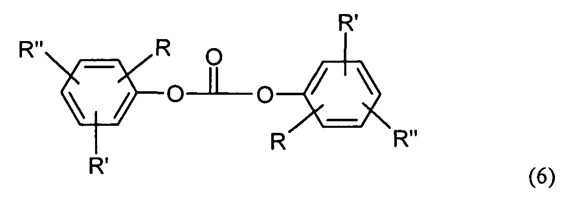 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)-carbonat, Cumylphenylphenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenylphenylcarbonat, Di-(4-Phenoxyphenyl)carbonat, 3-Pentadecylphenyl-phenylcarbonat, Di-(3-Pentadecylphenyl)carbonat Tritylphenyl-phenylcarbonat, Di-Tritylphenylcarbonat,
bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureestern beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren, wie in der genannten Literatur beschrieben, basische Katalysatoren wie beispielsweise Alkali- und Erdalkalihydroxide und -oxide, aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (7) 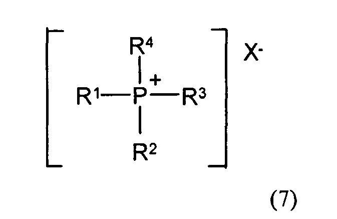 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind

Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediesters in der Schmelze wird bevorzugt in zwei Stufen durchgeführt. In der ersten Stufe findet das Aufschmelzen der aromatischen Dihydroxyverbindung und des Kohlensäurediesters bei Temperaturen von 80 - 250°C, bevorzugt 100 - 230°C, besonders bevorzugt 120 - 190°C unter normalem Druck in 0 - 5 Stunden, bevorzugt 0,25 - 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 - 320°C, bevorzugt 270 - 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediesters zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

In einer bevorzugten Ausführungsform wird Komponente B nach dem Schmelzeumesterungsverfahren hergestellt.

Die relative Lösungsviskosität der verwendeten Copolycarbonate, bestimmt nach DIN 51562, liegt bevorzugt im Bereich von = 1,15 - 1,35.

Besonders bevorzugt sind Polycarbonatzusammensetzungen, in denen Komponente B oder Komponente A und Komponente B wenigstens zum Teil als Endgruppe eine Struktureinheit der Formel (3) enthalten.

### Komponente C

Gegenstand der vorliegenden Erfindung sind weiterhin Zusammensetzungen enthaltend oben genanntes Copolycarbonat mit Alkylphenol der Formel (3) als Endgruppe, und optional mindestens ein Zusatzstoff, ausgewählt aus der Gruppe der für diese Thermoplasten üblichen Zusatzstoffe wie Füllstoffe, Ruß, UV-Stabilisatoren, IR-Stabilisatoren, Thermostabilisatoren, Antistatika und Pigmente, Farbmittel in den üblichen Mengen; gegebenenfalls können das Entformungsverhalten, das Fließverhalten, und/oder die Flammwidrigkeit noch durch Zusatz externer Entformungsmittel, Fließmittel, und/oder Flammschutzmittel wie Sulfonsäuresalze, PTFE-Polymere bzw. PTFE-Copolymere, bromierte Oligocarbonate, oder Oligophosphate sowie Phosphazene verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Die Zusammensetzung enthält im Allgemeinen 0 bis 5, bevorzugt 0 bis 2,5, besonders bevorzugt 0 bis 1,6 Gew.-%, ganz besonders bevorzugt 0,04 bis 1,0 Gew.-%, insbesondere ganz besonders bevorzugt 0,04 bis 0,8 Gew.-% (bezogen auf die Gesamtzusammensetzung) Zusatzstoffe.

Die den erfindungsgemäßen Zusammensetzungen gegebenenfalls zugesetzten Entformungsmitttel sind bevorzugt ausgewählt aus der Gruppe, die Pentaerythrittetrastearat, Glycerinmonostearat, langkettige Fettsäureester, wie beispielsweise Stearylstearat und Propandiolstearat sowie deren Mischungen umfasst. Die Entformungsmittel werden eingesetzt in Mengen von 0,05 Gew.-% bis 2,00 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Formmasse.

Geeignete Zusatzstoffe sind beispielsweise beschrieben in "Additives for Plastics Handbook, John Murphy, Elsevier, Oxford 1999", im "Plastics Additives Handbook, Hans Zweifel, Hanser, München 2001 ".

Geeignete Antioxidantien bzw. Thermostabilisatoren sind beispielsweise:

Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyctohexy)-4-hydroxyphenyl)-propionsäure, Ester von 3,5-Di-tert-butyl-4-hydroxyphenylessigsäure, Amide von β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Triisoctylphosphat (TOF), Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)-pentaerythritoldiphosphit (ADK STAB PEP-36) oder Triphenylphosphin (TPP). Sie werden allein oder im Gemisch (z. B. Irganox B900 oder Doverphos S-9228 mit Irganox B900 bzw. Irganox 1076 oder Triphenylphosphin (TPP) mit Triisoctylphosphin (TOF)) eingesetzt.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw. substituierte Hydroxyalkoxyphenyl, 1,3,5-triazole, bevorzugt sind substituierte Benzotriazole wie z.B. 2-(2'-hydroxy-5'-methyl-phenyl)-benzotriazol, 2-(2'-hydroxy-3',5'-di-t-butyl-phenyl)-benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)-benzotriazol, 2-(2'-hydroxy-3',5'-di-tert.-amylphenyl)-benzotriazol, 2-[2'-hydroxy-3'-(3",4",5",6"-tetrahydrophthalimido-ethyl)-5'-methylphenyl]-benzotriazol and 2,2'-methylenbis [4-(1,1,3,3-tetramethylbutyl)-6-(2H-benzotriazol-2-yl)-phenol].

Als UV-Stabilisatoren sind weiterhin geeignet ausgewählt aus der Gruppe, die Benzotriazole (z. B. Tinuvine der Fa. Ciba), Triazin CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren umfasst.

Beispiele für geeignete UV-Absorber sind:
a) Malonester der Formel (I): 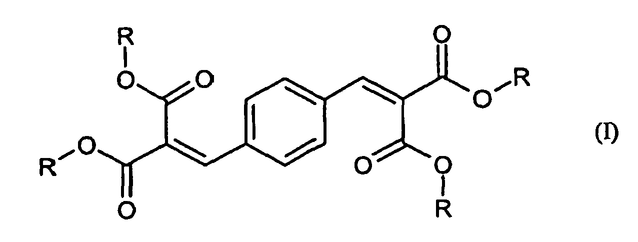 worin R Alkyl bedeutet. Bevorzugt steht R für C₁-C₆-Alkyl, insbesondere für C₁-C₄-Alkyl und besonders bevorzugt für Ethyl.
b) Benzotriazol-Derivate nach Formel (II): 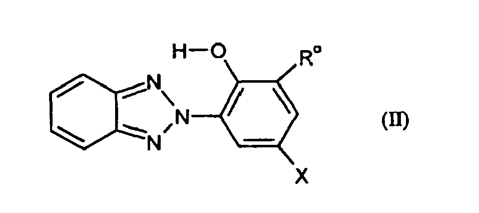 In Formel (II) sind R° enthaltend und X gleich oder verschieden und bedeuten H oder Alkyl oder Alkylaryl.
   Bevorzugt sind dabei Tinuvin® 329 mit X = 1,1,3,3-Tetramethylbutyl und R° = H, Tinuvin® 350 mit X = tert-Butyl und R° = 2-Butyl und Tinuvin® 234 mit X und R° = 1,1-Dimethyl-1-phenyl
c) Dimere Benzotriazol-Derivate nach Formel (III): 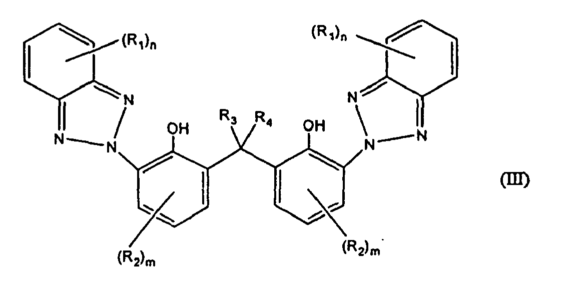 In Formel (III) sind R1 und R2 gleich oder verschieden und bedeuten H, Halogen, C₁-C₁₀-Alkyl, C₅-C₁₀-Cycloalkyl, C₇-C₁₃-Aralkyl, C₆-C₁₄-Aryl, -OR5 oder -(CO)-O-R5 mit R5 = H oder C1-C4-Alkyl.
   In Formel (III) sind R3 und R4 ebenfalls gleich oder verschieden und bedeuten H, C₁-C₄-Alkyl, C₅-C₆-Cycloalkyl, Benzyl oder C₆-C₁₄-Aryl.
   In Formel (III) bedeuten m 1, 2 oder 3 und n 1, 2, 3 oder 4.
   Bevorzugt ist dabei Tinuvin® 360 mit R1 = R3 = R4 = H; n = 4; R2 = 1,1,3,3-Tetramethylbutyl; m = 1
d) Dimere Benzotriazol-Derivate nach Formel (IV): 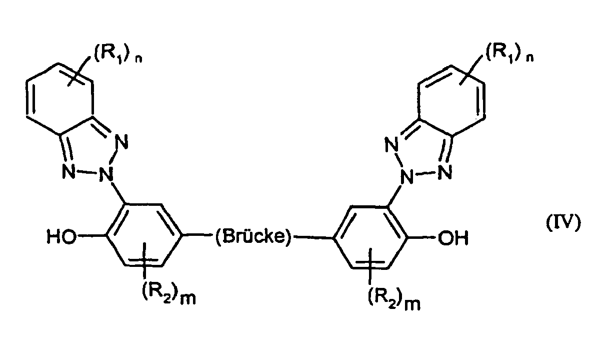 worin die Brücke 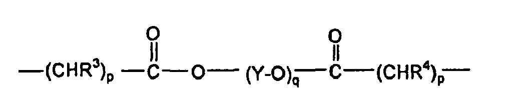 bedeutet, R , R , m und n die für Formel (III) genannte Bedeutung haben, und worin p eine ganze Zahl von 0 bis 3 ist, q eine ganze Zahl von 1 bis 10 ist, Y gleich -CH₂-CH₂-, -(CH₂)₃-, -(CH₂)₄-, - (CH₂)₅-, -(CH₂)₆-, oder CH(CH₃)-CH₂-ist und R3 und R4 die für Formel (III) genannte Bedeutung haben.
   Bevorzugt ist dabei Tinuvin® 840 mit R1 = H; n = 4; R2 = tert-Butyl; m = 1; R2 ist in ortho-Stellung zur OH-Gruppe angebracht; R3 = R4 = H; p = 2; Y = -(CH₂)₅-; q = 1.
e) Triazin-Derivate nach Formel (V): 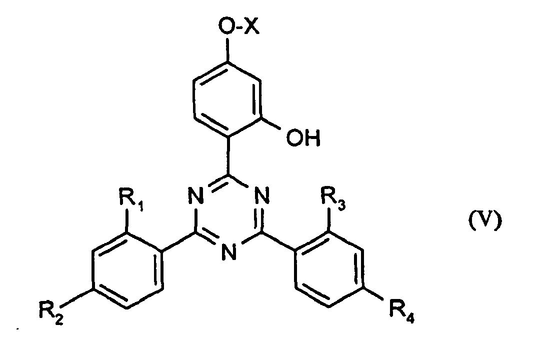 worin R1, R2, R3, R4 gleich oder verschieden sind und H, Alkyl, Aryl, CN oder Halogen sind und X gleich Alkyl, vorzugsweise iso-Octyl, ist.
   Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl.
f) Triazin-Derivate der folgenden Formel (Va): 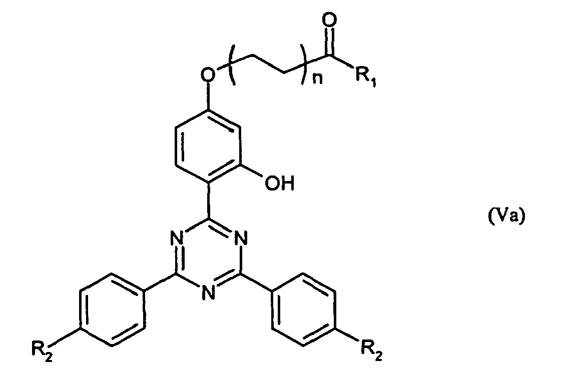 worin R1 gleich C₁-C₁₇-Alkyl bedeutet, R2 gleich H oder C₁-C₄-Alkyl bedeutet und n gleich 0 bis 20 ist.
g) Dimere Triazin-Derivate der Formel (VI): 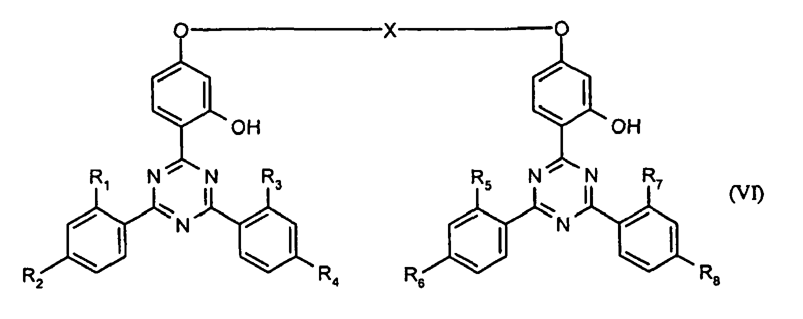 worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH₂ CH₂-O-)n-C(=O)- ist und n für 1 bis 10, vorzugsweise 1 bis 5, insbesondere 1 bis 3.
h) Diarylcyanoacrylate der Formel (VII): 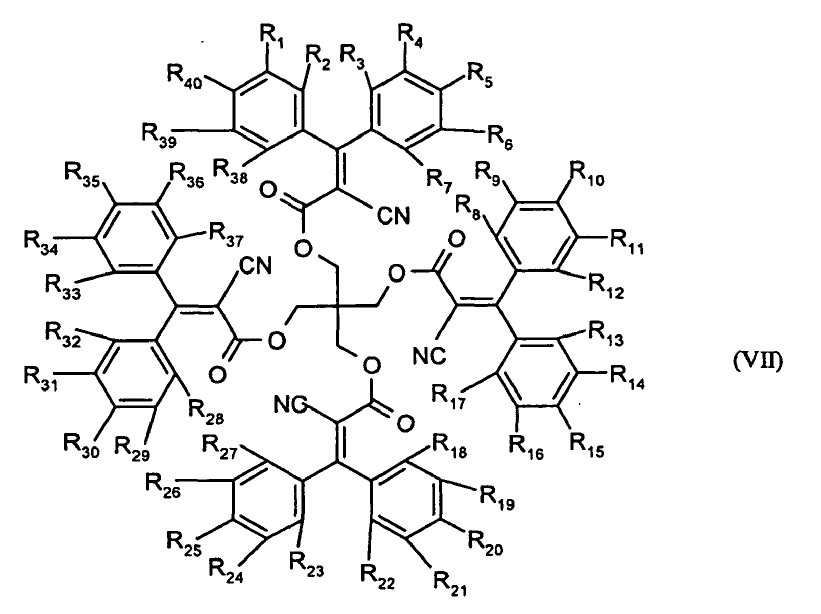 worin R bis R40 gleich oder verschieden sein können und H, Alkyl, CN oder Halogen bedeuten.

Bevorzugt ist dabei Uvinul® 3030 mit R1 bis R40 = H.

Besonders bevorzugte UV-Stabilisatoren für die erfindungsgemäßen Formmassen sind Verbindungen aus der Gruppe, die aus den Benzotriazolen (b) und dimeren Benzotriazolen (c und d), den Malonestern (a) und den Cyanacrylaten (h) sowie Mischungen dieser Verbindungen besteht.

Die UV-Stabilisatoren werden eingesetzt in Mengen von 0,01 Gew.-% bis 2,0 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Zusatzstoffe sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, Ruß, IR-Absorber, einzeln, im Gemisch oder auch in Kombination mit Stabilisatoren, Glasfasern, Glas(hohl)kugeln, anorganischen Füllstoffen wie beispielsweise Titandioxid oder Bariumsulfat zugesetzt werden.

Die erfindungsgemäßen Polycarbonate und Polycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die erfindungsgemäßen Polycarbonatzusammensetzungen, gegebenenfalls in Abmischung mit anderen Thermoplasten und/oder üblichen Zusatzstoffen, können zu beliebigen Formkörpern/Extrudaten verarbeitet überall dort eingesetzt werden, wo bereits bekannte Polycarbonate, Polyestercarbonate und Polyester eingesetzt werden:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien und Folienlaminaten.
3. Automobilscheinwerfer, bezels, Blinker, Reflektoren
4. Als transluzente Kunststoffe mit einem Gehalt an Glasfasern für lichttechnische Zwecke Als transluzente Kunststoffe mit einem Gehalt an Bariumsulfat, Titandioxid und oder Zirkoniumoxid bzw.
5. Zur Herstellung von Präzisionsspritzgußteilen, wie beispielsweise Linsen, Kollimatoren, Linsenhalterungen, Lichtleitelementen und LED-Anwendungen.
6. Als Elektroisolierstoffe für elektrische Leiter und für Steckergehäuse sowie Steckverbinder
7. Gehäuse für elektrische Geräte
8. Schutzbrillen, Visiere
9. Für medizinische Anwendungen, Medical Devices, z.B. Oxygenatoren, Dialysatoren (Hohlfaserdialysatoren), 3-Wege-Hähne, Schlauchverbinder, Blutfilter, Injektionssysteme, Inhalatoren, Ampullen
10. Extrudierte Formkörper wie Platten und Folien
11. LED-Anwendungen (Sockel, Reflektoren, heat sinks),

Die Formkörper, Extrudate, Folien und Folienlaminate aus den erfindungsgemäßen Polymerzusammensetzungen sind ebenfalls Gegenstand dieser Anmeldung, genauso wie Formteile, Extrudate und Folien enthaltend Coextrusionsschichten aus den erfindungsgemäßen Polymerzusammensetzungen.

Die nachfolgenden Beispiele sollen die Erfindung illustrieren, ohne sie jedoch einzuschränken.

### Beispiele

### Verwendete Rohstoffe:

- **PC 1**: ist ein Polycarbonat auf Basis von Bisphenol A, p-tert.-Butylphenol als Kettenabbrecher mit einer Schmelze-Volumenfließrate (MVR) von 12,5 cm³/10 min (300°C/1,2 kg).
- **PC 2**: ist ein Polycarbonat auf Basis von Bisphenol A, Phenol als Kettenabbrecher mit einem MVR von 12,5 cm³/10 min (300°C/1,2 kg)
- **PC 3**: ist ein Polycarbonat auf Basis von Bisphenol A, p-tert.-Butylphenol als Kettenabbrecher mit einem MVR von 9,5 cm³/10 min (300°C/1,2 kg).
- **PC 4**: ist ein Polycarbonat auf Basis von Bisphenol A, Phenol als Kettenabbrecher mit einem MVR von 9,5 cm³/10 min (300°C/1,2 kg)

- **CoPC 1**: ist ein Copolycarbonat auf Basis von Bisphenol A und Bisphenol TMC, Phenol als Kettenabbrecher mit einem MVR von 17 cm³/10 min (330°C/2,16 kg) (Apec 1745 von Bayer MaterialScience AG).
- **CoPC 2**: ist ein Copolycarbonat auf Basis von Bisphenol A und Bisphenol TMC, Phenol als Kettenabbrecher mit einem MVR von 18 cm³/10 min (330°C/2,16 kg)
- **CoPC 3**: ist ein Copolycarbonat auf Basis von Bisphenol A und Bisphenol TMC, p-tert.-Butylphenol als Kettenabbrecher mit einem MVR von 18 cm³/10 min (330°C/2,16 kg)

Polycarbonatzusammensetzungen auf Basis der Rohstoffe PC1 - PC4 sowie CoPC (Apec 1745) werden auf einem Zweiwellenextruder bei 300 °C in den in Tabelle 1 und 2 aufgeführten Rezepturen vermischt. Die so durch Compoundierung erhalten Polymerzusammensetzungen werden granuliert und stehen für polymerphysikalische Charakterisierungen zur Verfügung.

### Charakterisierung der erfindungsgemäßen Formmassen (Testmethoden):

Die Bestimmung der Schmelze-Volumenfließrate (MVR) erfolgt bei 300°C und 1,2 kg Belastung bzw. bei 330°C und 2,16 kg Belastung mit einem Schmelzindexprüfgerätnach ISO 1133.

Die Bestimmung des I-MVR erfolgt analog wie oben beschrieben (ISO 1133), allerdings erst nach einer thermischen Dauerbelastung von 20 Minuten.

Die Vicat-Temperatur VST B50 wird nach DIN ISO 306, Methode B bei einer Heizlast von 50 K/h ermittelt.

**Tabelle 1:**

| **Beispiel:** | | **1** | **2** | **3** | **4** | **5** | **6*** | **7*** | **8*** | **9*** | **10*** |
|---|---|---|---|---|---|---|---|---|---|---|---|
| BPA Homo PC 1 | % | 90 | 80 | 70 | 50 | 40 | - | - | - | - | - |
| BPA Homo PC 2 (Vergleich) | % | - | - | - | - | - | 90 | 80 | 70 | 50 | 40 |
| CoPC 1 | % | 10 | 20 | 30 | 50 | 60 | 10 | 20 | 30 | 50 | 60 |
| | | | | | | | | | | | |

| **Ergebnisse** | | **1** | **2** | **3** | **4** | **5** | **6*** | **7*** | **8*** | **9*** | **10*** |
|---|---|---|---|---|---|---|---|---|---|---|---|
| MVR 300°C/1.2kg | ml/10min | 10,0 | 8,6 | 7,7 | 5,6 | 4,8 | 8,9 | 7,7 | 6,9 | 5,4 | 4,6 |
| IMVR 300°C/1.2kg 20' | ml/10min | 10,0 | 8,7 | 7,8 | 5,6 | 4,8 | 9,1 | 8,1 | 6,9 | 5,5 | 4,8 |
| **ΔMVR / IMVR 20'** | | **0,0** | **0,1** | **0,1** | **0,0** | **0,0** | **0,2** | **0,4** | **0,0** | **0,1** | **0,2** |
| Vicat VST B50 | °C | 150,6 | 152,2 | 153,9 | 157,7 | 159,5 | 148,5 | 150,8 | 152,9 | 157,3 | 159,3 |

| | | | | | | | | | | | |
|---|---|---|---|---|---|---|---|---|---|---|---|
| ***Vergleichsbeispiel** | | | | | | | | | | | |

**Tabelle 2:**

| **Beispiel:** | | **11** | **12** | **13** | **14** | **15** | **16*** | **17*** | **18*** | **19*** |
|---|---|---|---|---|---|---|---|---|---|---|
| BPA Homo PC 3 | % | 90 | 80 | 70 | 50 | 40 | - | - | - | - |
| BPA Homo PC 4 (Vergleich) | % | - | - | - | - | - | 90 | 80 | 70 | 50 |
| CoPC 1 | % | 10 | 20 | 30 | 50 | 60 | 10 | 20 | 30 | 50 |
| | | | | | | | | | | |

| **Ergebnisse** | | **11** | **12** | **13** | **14** | **15** | **16*** | **17*** | **18*** | **19*** |
|---|---|---|---|---|---|---|---|---|---|---|
| MVR 300°C/1.2kg | ml/10min | 8,1 | 7,4 | 6,4 | 5,2 | 4,5 | 9,2 | 7,9 | 7,0 | 5,5 |
| IMVR 300°C/1.2kg 20' | ml/10min | 8,4 | 7,5 | 6,6 | 5,3 | 4,7 | 9,3 | 8,2 | 7,3 | 5,6 |
| **ΔMVR / IMVR 20'** | | **0,3** | **0,1** | **0,2** | **0,1** | **0,2** | **0,1** | **0,3** | **0,3** | **0,1** |
| Vicat VST B50 | °C | 151,1 | 152,4 | 154,6 | 159,5 | 157,9 | 148,1 | 150,1 | 152,1 | 156,5 |

| | | | | | | | | | | |
|---|---|---|---|---|---|---|---|---|---|---|
| ***Vergleichsbeispiel** | | | | | | | | | | |

Wie sich aus Tabelle 1 und 2 deutlich ergibt, weisen die erfindungsgemäßen Zusammensetzungen 1-5 bzw. 11-15 jeweils eine deutlich höhere Vicat-Temperatur gegenüber den Vergleichs-Polycarbonatzusammensetzungen 6-10 bzw. 16-20 auf.

Bei den Versuchen in Tabelle 1 und 2 wurde somit gezeigt, dass die Herstellung der Copolycarbonat-Zusammensetzungen der erfindungsgemäßen Mischungen durch Compoundierung zu höheren Wärmeformbeständigkeiten führt.

**Tabelle 3**

| **Beispiel** | | **20** | **21** | **22** | **23*** | **24*** | **25*** |
|---|---|---|---|---|---|---|---|
| CoPC 3 (BUP) | % | 70 | 80 | 90 | - | - | - |
| CoPC 2 (PHE), Vergleich | % | - | - | - | 70 | 80 | 90 |
| BPA Homo PC 2 | % | 30 | 20 | 10 | 30 | 20 | 10 |
| | | | | | | | |

| **Ergebnisse** | | **20** | **21** | **22** | **23*** | **24*** | **25*** |
|---|---|---|---|---|---|---|---|
| MVR 330°C/2,16 kg | ml/10 min | 21,2 | 19,3 | 16,7 | 22,5 | 20,6 | 18,9 |
| IMVR 330°C/2,16 kg 20' | ml/10 min | 21,9 | 19,8 | 17,3 | 22,8 | 21,3 | 19,1 |
| **ΔMVR / IMVR 20'** | | 0,7 | 0,5 | 0,7 | 0,3 | 0,7 | 0,2 |
| Vicat VST B50 | °C | 172,9 | 177,5 | 181,4 | 171,2 | 176,4 | 180,1 |

| | | | | | | | |
|---|---|---|---|---|---|---|---|
| ***Vergleichsbeispiel** | | | | | | | |

Wie sich aus Tabelle 1 und 2 deutlich ergibt, weisen die erfindungsgemäßen Zusammensetzungen 1-5 bzw. 11-15 bzw. 20-22 jeweils eine deutlich höhere Vicat-Temperatur gegenüber den Vergleichs-Polycarbonatzusammensetzungen 6-10 bzw. 16-20 bzw. 23-25 auf.

Bei den Versuchen in Tabelle 1, 2 und 3 wurde somit gezeigt, dass die Herstellung der Copolycarbonat-Zusammensetzungen der erfindungsgemäßen Mischungen durch Compoundierung zu höheren Wärmeformbeständigkeiten führt.

## Patentansprüche

1. Polycarbonatzusammensetzungen enthaltend:
A) 5 bis 90 Gew.-Teile, bevorzugt 10 bis 80 Gew.-Teile (bezogen auf die Summe der Gewichtsteile der Komponenten A+B) eines Copolycarbonat enthaltend eine oder mehrere Monomereinheiten abgeleitet von Verbindungen des Diphenolbausteins der Formel (1) 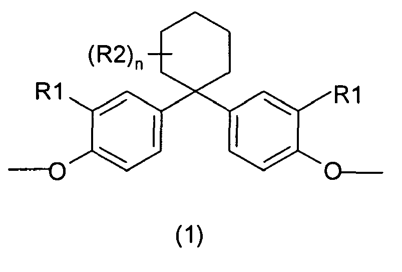 in der
R1 für Wasserstoff oder C₁-C₄-Alkyl,
R2 für C₁-C₄-Alkyl
n für 0, 1, 2 oder 3
B) 95 bis 10 Gew.-Teile, bevorzugt 90 bis 20 Gew.-Teile (bezogen auf die Summe der Gewichtsteile der Komponenten A+B) eines (Co)polycarbonats enthaltend eine oder mehrere Monomereinheiten von Verbindungen der allgemeinen Formel (2): 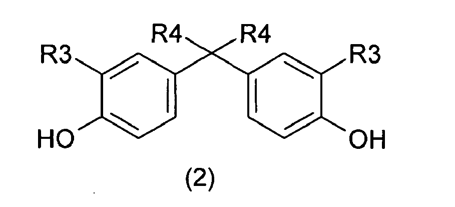 in denen R3 für H, lineare oder verzweigte C₁-C₁₀Alkyl steht
und
in denen R4 für lineare oder verzweigte C₁-C₁₀Alkyl steht,
wobei wenigstens eine der Komponenten A oder B wenigstens zum Teil als Endgruppe eine Struktureinheit der Formel (3) enthält

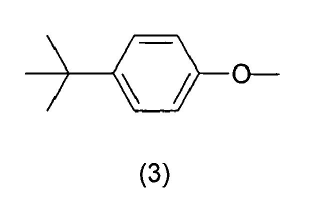

2. Polycarbonatzusammensetzung gemäß Anspruch 1, **dadurch gekennzeichnet, dass** R1 für Wasserstoff und R2 für C₁-Alkyl (Methyl) steht und n gleich 3.

3. Polycarbonatzusammensetzung gemäß einem der Ansprüche 1 oder 2, **dadurch gekennzeichnet, dass** wenigstens eine der Komponenten A oder B zusätzlich Diphenole der Formel (4) enthält 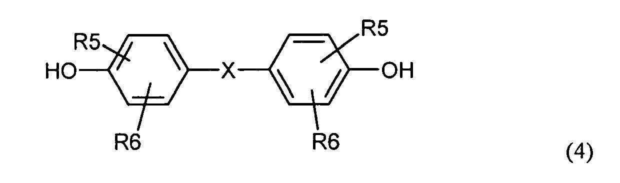 in welcher
R5 und R6 unabhängig voneinander für Wasserstoff, C₁-C₁₈-Alkyl-, C₁-C₁₈-Alkoxy, Halogen, jeweils gegebenenfalls substituiertes Aryl oder Aralkyl, stehen, und
X für eine Einfachbindung, -SO₂- -CO-, -O-, -S-, C₁- bis C₆-Alkylen, C₂- bis C₅-Alkyliden oder C₅- bis C₆- Cycloalkyliden, welches mit C₁-C₆-Alkyl substituiert sein kann, für C₆-C₁₂-Arylen, welches gegebenenfalls mit weiteren Heteroatome enthaltenden aromatischen Ringen kondensiert sein kann, steht.

4. Polycarbonatzusammensetzung gemäß einem der Ansprüche 1 bis 3, **dadurch gekennzeichnet, dass** die Zusammensetzung 10 - 80 Gew.-Teile Komponente A und 90 - 20 Gew.-Teile Komponente B (jeweils bezogen auf die Summe der Gewichtsteile der Komponenten A+B) enthält.

5. Polycarbonatzusammensetzung gemäß einem der Ansprüche 1 bis 4, **dadurch gekennzeichnet, dass** der Anteil der Diphenole der Formel (1) im Copolycarbonat 0,1 - 88 mol-% (bezogen auf die Summe der Mole eingesetzter Diphenole) beträgt.

6. Polycarbonatzusammensetzung gemäß einem der Ansprüche 1 bis 5, **dadurch gekennzeichnet, dass** Komponente A die Monomereinheiten abgeleitet von Verbindungen der allgemeinen Formeln (1b) und (4b) enthält.

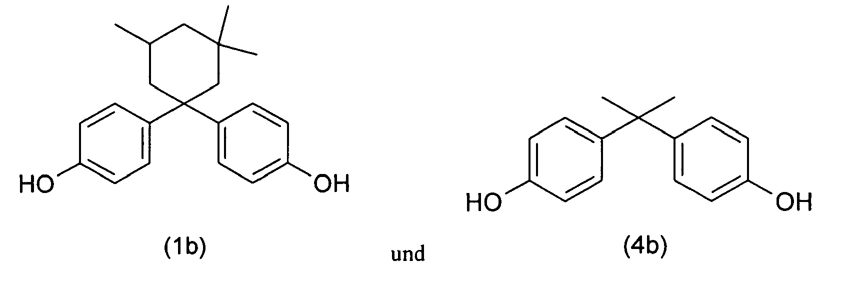

7. Polycarbonatzusammensetzung gemäß einem der Ansprüche 1 bis 6, **dadurch gekennzeichnet, dass** 0 bis 5 Gew.-Teile (bezogen auf die Summe der Gewichtsteile der Komponenten A+B) Zusatzstoffe (Komponente C) in der Zusammensetzung enthalten sind.

8. Verwendung von Polycarbonatzusammensetzungen gemäß einem der Ansprüche 1 bis 7 zur Herstellung von Formteilen, Extrudaten, Folien, Folienlaminaten und Coextrusionsschichten, wie bezels, Reflektoren, Blinker.

9. Formteile, Extrudate, Folien und Folienlaminate, erhältlich aus Polycarbonatzusammensetzungen gemäß einem der Ansprüche 1 bis 7 sowie Formteile, Extrudate und Folien enthaltend Coextrusionsschichten erhältlich aus Copolycarbonaten gemäß Anspruch 1.

10. Tastaturen in Elektro- und Elektronikgeräten, Linsen, Bildschirm/Display-Abdeckungen und LED-Anwendungen gemäß Anspruch 9.

11. Verfahren zur Herstellung von Polycarbonatzusammensetzungen gemäß einem der Ansprüche 1 bis 7 durch Compoundierung aus Polycarbonaten nach dem Phasengrenzflächenverfahren oder Schmelzumesterungsverfahren, **dadurch gekennzeichnet, dass** eine oder mehrere Verbindungen ausgewählt aus Verbindungen der Formeln (1), (2) oder (4) als Diphenole eingesetzt werden.
